# EUROPÄISCHE PATENTSCHRIFT

(11) **EP 3 880 440 B1**
(45) Veröffentlichungstag und Bekanntmachung des Hinweises auf die Patenterteilung: **30.10.2024**
(21) Anmeldenummer: 19798662.3
(22) Anmeldetag: 12.11.2019
(51) Int. Cl.: B29C 64/245, B29C 64/227, B33Y 30/00

(54) **ADDITIVE FERTIGUNGSMASCHINE UMFASSEND EIN WERKSTÜCKTRÄGERSYSTEM**
ADDITIVE MANUFACTURING MACHINE COMPRISING A WORKPIECE SUPPORT SYSTEM
MACHINE DE FABRICATION ADDITIVE COMPRENANT UN SYSTÈME DE PORTE-PIÈCES

(30) Priorität: 12.11.2018 LU 101001
(43) Veröffentlichungstag der Anmeldung: 22.09.2021
(73) Patentinhaber: BigRep GmbH, 10961 Berlin (DE)
(72) Erfinder: DIEHR, Andreas, 10961 Berlin (DE)
(74) Vertreter: Paustian & Partner Patentanwälte mbB
(86) Internationale Anmeldenummer: PCT/EP2019/080987
(87) Internationale Veröffentlichungsnummer: WO 2020/099381

(56) Entgegenhaltungen:
- EP-A1- 0 581 445
- EP-A1- 2 934 859
- EP-A1- 3 275 628
- DE-A1- 102017 001 622
- US-A1- 2018 184 702

## Beschreibung

### GEBIET

Die vorliegende Offenbarung bezieht sich auf das Gebiet der additiven Fertigungsverfahren bzw. des sogenannten 3D-Drucks. Genauer bezieht sich die vorliegende Offenbarung auf ein Werkstückträgersystem bzw. bewegliches Druckbett für eine additive Fertigungsmaschine bzw. einen sogenannten 3D- Drucker.

### HINTERGRUND

Bei additiven Fertigungsverfahren wird ein Werkstück durch Materialauftrag schichtweise auf einer Bauplattform bzw. einem Werkstückträger oder auch Druckbett aufgebaut. Hierzu können alle im Stand der Technik bekannten Kunststoff oder Metallmaterialien in Frage kommen. Bei den Verfahren, die Kunststoff zur Erstellung des Werkstücks nutzen, kommen zum Beispiel FFF (fused filament fabrication) und SLA (Stereolithographie) in Frage.

Herkömmlicherweise werden die erstellten Werkstücke aus der additiven Fertigungsmaschine von einem Druckbett bzw. Werkstückträger manuell entnommen. Weiterhin ist es bekannt, dass die Werkstücke auf einer Matte bzw. Folie erstellt werden und diese Matte bzw. Folie zusammen mit dem Werkstück manuell aus der additiven Fertigungsmaschine entnommen wird. Dokument US 2018184702 A1 offenbart eine additive Fertigungsmaschine mit fahrbaren Tabletts und einem durch Türen abgeschlossenen Fertigungsraum.

### ÜBERBLICK

Angesichts einer verbesserten Bedienerfreundlichkeit und eines automatisierten Ablaufs z.B. in sogenannten Druckerfarmen, ist es wünschenswert und Aufgabe der vorliegenden Offenbarung, dass die Werkstückentnahme erleichtert wird.

Die obige Aufgabe wird durch eine Vorrichtung gemäß des beigefügten unabhängigen Anspruchs gelöst. Ausgewählte Ausführungsformen bzw. Merkmale sind Gegenstände der jeweiligen abhängigen Ansprüche, welche jeweils für sich genommen oder in verschiedener Kombination miteinander Ausgestaltungen der Erfindung darstellen können.

Gemäß einem Aspekt der vorliegenden Offenbarung umfasst eine additive Fertigungsmaschine ein Werkstückträgersystem und eine Tür. Das Werkstückträgersystem umfasst einen Werkstückträger und ein Verfahrsystem. Dabei ist der Werkstückträger mit dem Verfahrsystem werkzeuglos lösbar verbunden. Das Verfahrsystem umfasst ein Teleskopsystem. Dies ist vorteilhaft, da somit Raum in einer additiven Fertigungsmaschine eingespart werden kann, weil das Verfahrsystem in seinen Dimensionen klein gehalten werden kann. Unter einem Verfahrsystem wird im Rahmen dieser Offenbarung ein System zum Bewegen des Werkstückträgers verstanden, welches nicht die Funktion einer Fertigungsachse der additiven Fertigungsmaschine hat. Unter Fertigungsachsen werden üblicherweise die x, y und z-Achsen der additiven Fertigungsmaschine verstanden, die z.B. einen Druckkopf und/oder den Werkstückträger der additiven Fertigungsmaschine während der Werkstückerstellung bzw. für die Werkstückerstellung bewegen. Die Fertigungsachsen können mehrere Führungen bzw. Antriebe umfassen, dies können z.B. bekannte Portalsysteme bzw. Linearsysteme sein. Das Verfahrsystem kann zum Beispiel zwei Vorrichtungen umfassen, die parallel zu zwei Kanten des Werkstückträgers angeordnet sind. Dabei bewegt das Verfahrsystem den Werkstückträger durch die geöffnete Türe aus einem Innenraum der additiven Fertigungsmaschine heraus. Dies hat den Vorteil, dass z.B. ein Bediener einfach an das oder die erzeugten Werkstücke gelangen kann. Weiterhin hat dieses den Vorteil, dass der Werkstückträger einfach aus der additiven Fertigungsmaschine entnommen werden kann.

Das Verfahrsystem hat die Aufgabe den Werkstückträger zu bewegen, sodass z.B. die Entnahme eines auf dem Werkstückträger befindlichen Werkstücks einfacher möglich ist. Weiterhin kann durch die werkzeuglose und lösbare Verbindung zwischen dem Werkstückträger und dem Verfahrsystem der Werkstückträger einfach und gänzlich aus der additiven Fertigungsmaschine entnommen werden. Dies kann z.B. für eine automatische Entnahme im Rahmen einer Druckerfarm vorteilhaft sein, weil somit ein automatischer Ablauf in der Druckerfarm realisiert werden kann. Weiterhin kann das Entnehmen des Werkstückträgers vorteilhaft für eine hohe Maschinenausnutzung der additiven Fertigungsmaschine sein, weil so ein erster Werkzeugträger mit zumindest einem Werkstück entnommen und ein zweiter leerer Werkzeugträger in die additive Fertigungsmaschine eingesetzt werden kann, ohne dass zunächst das zumindest eine Werkstück von dem ersten Werkzeugträger zeitintensiv entfernt werden muss und der erste Werkstückträger für den nächsten Druck vorbereitet werden kann.

Gemäß einem weiteren Aspekt der vorliegenden Offenbarung kann das Verfahrsystem den Werkstückträger aus einer Bearbeitungsposition in eine Verfahrposition bewegen. Dies kann vorteilhaft sein, da z.B. in der Bearbeitungsposition der Werkstückträger an zumindest eine der oben genannten Fertigungsachsen der additiven Fertigungsmaschine gekoppelt sein kann und das Verfahrsystem nicht dauerhaft die Last des Werkstückträgers tragen muss. Weiterhin kann es vorteilhaft sein, dass der Werkstückträger in einer genau definierten Bearbeitungsposition innerhalb der additiven Fertigungsmaschine befindlich ist, da somit unterschiedliche Werkstückträger immer in derselben Position innerhalb der additiven Fertigungsmaschine positioniert werden können und somit eine gleichbleibende Qualität der Werkstücke gewährleistet werden kann.

Für diese Offenbarung werden die folgenden Positionen definiert: die Bearbeitungsposition, siehe oben. Eine ausgefahrene Position, in welcher der Werkstückträger durch das Verfahrsystem aus der additiven Fertigungsmaschine ausgefahren wurde, so dass ein Werkstück bzw. der Werkstückträger entnommen werden kann. Eine eingefahrene Position, in welcher der Werkstückträger und das Verfahrsystem gänzlich in der additiven Fertigungsmaschine befindlich sind.

Gemäß einem weiteren Aspekt der vorliegenden Offenbarung kann Werkstückträger formschlüssig an dem Verfahrsystem und/oder in der oben genannten Bearbeitungsposition gehalten werden. Dies hat den Vorteil, dass die Verbindung zwischen dem Verfahrsystem und dem Werkzeugträger einfach gestaltet werden kann. Weiterhin kann somit z.B. eine genau definierte Position des Werkzeugträgers bezüglich dem Verfahrsystem ermöglicht werden.

Gemäß einem weiteren Aspekt der vorliegenden Offenbarung kann der Werkstückträger durch die Schwerkraft an dem Verfahrsystem und/oder in der oben genannten Bearbeitungsposition gehalten werden. Dies hat den Vorteil, dass eine einfache Verbindung, die z.B. schnell lösbar ist, ermöglicht werden kann.

Gemäß einem weiteren Aspekt der vorliegenden Offenbarung kann bei dem Werkstückträgersystem der Werkstückträger an mehreren Punkten an dem Verfahrsystem und/oder in der oben genannten Bearbeitungsposition gehalten werden. Dabei ist nur einer dieser Punkte eine spielfreie Verbindung. Dies hat den Vorteil, dass der Werkstückträger an einem definierten Punkt spielfrei mit dem Verfahrsystem verbunden ist und/oder in der Bearbeitungsposition gehalten wird, jedoch an anderen Punkten mit Spiel mit dem Verfahrsystem verbunden ist bzw. in der Bearbeitungsposition gehalten wird. Damit kann sich bei einer z.B. wärmebedingten Ausdehnung des Werkzugträgers, derselbe in Bezug auf das Verfahrsystem bzw. die Bearbeitungsposition bewegen und z.B. ein Verklemmen kann so verhindert werden.

Gemäß einem weiteren Aspekt der vorliegenden Offenbarung kann der Werkstückträger weiterhin eine Heizung umfassen. Dies hat den Vorteil, dass die Qualität der Werkstücke erhöht werden kann, weil keine thermische Energie aus einem Auftragsmaterial aus welchem das Werkstück gebildet wird, durch den Werkzeugträger unerwünscht und nachteilig abgezogen wird.

Gemäß einem weiteren Aspekt der vorliegenden Offenbarung kann das Werkstückträgersystem eine elektrische Verbindung zwischen dem Werkstückträger und dem Verfahrsystem umfassen. Dies hat den Vorteil, dass z.B. eine elektrische Heizung im Werkstückträger nicht über einen Akku (was ebenfalls möglich ist) mit Strom versorgt werden muss, sondern von der additiven Fertigungsmaschine mit Strom versorgt und somit auch gesteuert werden kann. Weiterhin kann z.B. über eine solche Verbindung ein Verriegelungsmechanismus angesteuert werden, welcher den Werkstückträger mit dem Verfahrsystem und/oder einer Fertigungsachse verriegelt.

Gemäß einem weiteren Aspekt der vorliegenden Offenbarung kann der Werkstückträger weiterhin eine Identifikationseinheit umfassen. Dies hat den Vorteil, dass z.B. Informationen über den Werkstückträger, das Werkstück, den Druckauftrag gespeichert und z.B. drahtlos abgefragt werden können.

Gemäß einem weiteren Aspekt der vorliegenden Offenbarung kann der Werkstückträger weiterhin Aufnahmepunkte umfasst. Dies hat den Vorteil, dass z.B. der Werkstückträger an einen Kran aufgehängt werden kann und/oder von einem Wagen bzw. Lastträger aufgenommen werden kann. Diese Lastträger können bekannte automatische Lastträger sein, die z.B. den Werkstückträger von unten aufnehmen und aus dem Verfahrsystem heben.

Gemäß einem weiteren Aspekt der vorliegenden Offenbarung kann der Werkstückträger elektrisch über eine lösbare Verbindung mit der additiven Fertigungsmaschine verbunden sein. Dies kann von Vorteil sein, da so die additive Fertigungsmaschine elektrische Einrichtungen steuern bzw. mit Strom versorgen kann, welche an dem Werkstückträger angeordnet sind. Dies kann z.B. eine Heizung oder eine Mikrocomputereinheit ggf. mit Drahtloskommunikation oder kann eine Identifikationseinheit sein.

Gemäß einem weiteren Aspekt der vorliegenden Offenbarung kann die additive Fertigungsmaschine weiterhin eine zusätzliche Tür aufweisen und der Werkstückträger auch durch die geöffnete zusätzliche Türe aus dem Innenraum der additiven Fertigungsmaschine heraus bewegen kann. Dies kann von Vorteil sein, da somit z.B. ein leerer Werkstückträger von von einer Seite in die additive Fertigungsmaschine eingebracht werden kann und dann von der anderen Seite durch die zusätzliche Tür wieder aus der additiven Fertigungsmaschine entfernt werden kann, wenn das Werkstück abgeschlossen ist.

Gemäß einem weiteren Aspekt der vorliegenden Offenbarung kann zumindest eine der Fertigungsachsen der additiven Fertigungsmaschine den Werkstückträger von dem Verfahrsystem aus einer Verfahrposition in die Bearbeitungsposition abheben. Dies kann zum Beispiel in der eingefahrenen Position erfolgen. Dies kann von Vorteil sein, da somit das Verfahrsystem nur parallel zu einer Richtung beweglich sein muss und damit einfacher gestaltet werden kann.

Gemäß einem weiteren Aspekt der vorliegenden Offenbarung kann bei einer additiven Fertigungsmaschine der Werkstückträger erste und zweite Verbindungspunkte umfassen, wobei die ersten Verbindungspunkte zum Eingriff mit dem Verfahrsystem vorgesehen sind und die zweiten Verbindungspunkte zum Eingriff mit einer Fertigungsachse der additiven Fertigungsmaschine vorgesehen sind. Dies kann von Verteil sein, dass somit das Verfahrsystem nur parallel einer Achse verfahren muss und damit einfacher gestaltet werden kann.

Obige Merkmale können untereinander frei kombiniert werden, so es technisch Sinn ergibt. Die Merkmale des Werkstückträgersystems können in einer additiven Fertigungsmaschine verwendet werden und die Merkmale der additiven Fertigungsmaschine können auf ein Werkstückträgersystem angewendet werden.

### KURZE BESCHREIBUNG DER ZEICHNUNGEN

Weitere Vorteile und Eigenschaften der Offenbarung ergeben sich aus der folgenden, rein illustrativen und in keiner Weise beschränkenden Beschreibung einer bevorzugten Ausführungsform der Offenbarung, unter Bezugnahme auf die beigefügten Figuren; darin zeigt:
Figur 1 eine schematische Ansicht einer additiven Fertigungsmaschine.
Figur 2 eine schematische Ansicht eines Details eines Werkstückträgersystems in einer additiven Fertigungsmaschine.

### BESCHREIBUNG DER AUSFUHRUNGSFORM

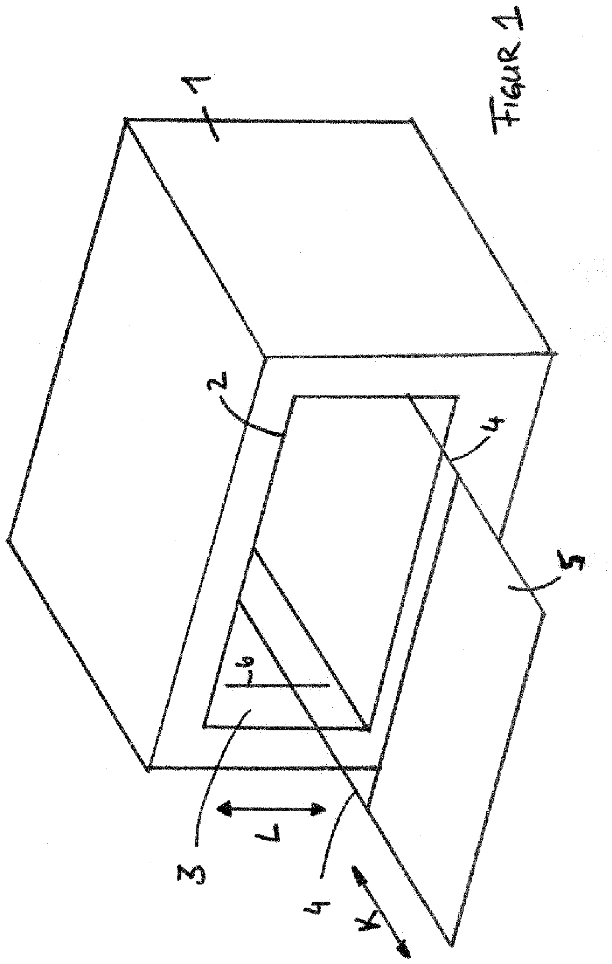

Unter Bezugnahme auf Figur 1 wird eine additive Fertigungsmaschine 1 gezeigt, welche eine Öffnung 2 eine Bauraumes 3 und ein Werkstückträgersystem aufweist. In dem Bauraum 3 ist ein Verfahrsystem 4 angeordnet, welches mit einem Werkstückträger 5 verbunden ist. In Figur 1 wird die ausgefahrene Position des Werkstückträgers 5 dargestellt. In einer eingefahrenen Position ist das Werkstückträgersystem zumindest umfassend das Verfahrsystem 4 und den Werkstückträger 5 gänzlich im Bauraum 3 befindlich, sodass zumindest eine Tür (nicht gezeigt) die Öffnung 2 verschießen kann. Die Tür kann beim Öffnen z.B. zuerst nach außen fahren und dann nach einer der Seiten (oben, unten, links, rechts). Oder es kann ein Schwenkmechanismus verwendet werden, der die Türe nach einer der Seiten verschwenkt. In der Bearbeitungsposition verfahren Fertigungsachsen 6 (nur eine in Figur 1 sichtbar) den Werkstückträger parallel zum Pfeil L für die Erstellung eines Werkstücks.

In der dargestellten Ausführungsform umfasst das Verfahrsystem 4 im Wesentlichen zwei Teleskopschienen, die beiderseits des Werkstückträgers 5 angeordnet sind. Der Werkstückträger 5 ist an in Figur 1 nicht gezeigten Verbindungspunkten mit dem Verfahrsystem 4 verbunden. Das Verfahrsystem 4 bewegt den Werkstückträger parallel zum Pfeil K in Figur 1, welcher im Wesentlichen parallel z.B. zur in Figur 1 sichtbaren unteren Fläche des Bauraums 3 ist. Somit kann der Werkstückträger 5 aus dem Bauraum 3 heraus und hinein gefahren werden.

In der dargestellten Ausführungsform fährt das Verfahrsystem 4 den Werkstückträger 5 aus der in Figur 4 gezeigten ausgefahrenen Position in der parallel zum Pfeil K in den Bauraum 3 ein, sodass das Verfahrsystem 4 und der Werkstückträger 5 vollständig im Bauraum 3 befindlich sind (Verfahrposition). Dann senkt sich das Verfahrsystem 4 parallel zum Pfeil L nach unten ab wobei sich der Werkstückträger 5 mitabsenkt, bis er mit nicht gezeigten Aufnahmen eingreift und in diesen gehalten wird. Dies ist die Bearbeitungsposition des Werkstückträgers 5. In der Bearbeitungsposition ist der Werkstückträger vom Verfahrsystem gelöst und kann ggf. durch ein Achssystem der additiven Fertigungsmaschine 1 zur Werkstückerstellung verfahren werden.

Ein Ablauf mit der in Figur 1 gezeigten Vorrichtung kann wie folgend ablaufen. Das Verfahrsystem 4 fährt nach Beendigung des 3D-Drucks parallel zum Pfeil L nach oben und hebt den Werkstückträger 5 aus der Bearbeitungsposition in die Verfahrposition. Dann fährt das Verfahrsystem 4 den Werkstückträger 5 parallel zum Pfeil K aus dem Bauraum 3 nach außen der additiven Fertigungsmaschine 1. Dort kann der Werkstückträger dann anhand von nicht gezeigten Aufnahmepunkten aus dem Verfahrsystem 4 entnommen werden. Dies kann z.B. durch ein Anheben von unten geschehen, oder durch ein Anheben von oben. Das Verfahrsystem 4 und/oder der Werkstückträger 5 kann Einrichtungen umfassen, die detektieren, dass der Werkstückträger 5 vom Verfahrsystem 4 in der ausgefahrenen Position gelöst sind, sodass eine Steuerung der additiven Fertigungsmaschine 1 das Verfahrsystem selbststätig einfährt und eine Türe des Bauraums 3 schließt, wenn nicht die Anwesenheit eines Werkstückträgers detektiert wird. Es können verschiedene Wartezeiten vorgesehen werden. Davon unabhängig kann auch Knopf am Verfahrsystem 4 vorgesehen sein, der mit der Steuerung der additiven Fertigungsmaschine zusammenwirkt.

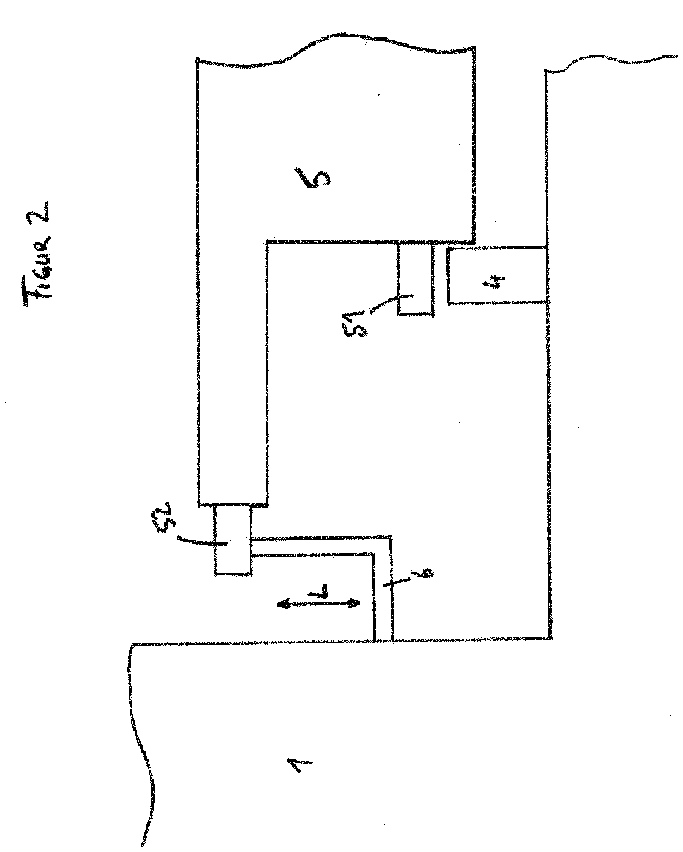

In Figur 2 wird ein alternatives Detail eines Werkstückträgersystems einer additiven Fertigungsmaschine 1 dargestellt. Der Werkstückträger 5 ist in der eingefahrenen Position, sowie der Bearbeitungsposition gezeigt. Dabei ist der Werkstückträger 5 über einen zweiten Verbindungspunkt 52 mit einer Fertigungsachse 6 der additiven Fertigungsmaschine 1 verbunden. Die Fertigungsachse 6 ist parallel verfahrbar zum Pfeil L. Ein erster Verbindungspunkt 51 ist in Richtung des Pfeils L oberhalb des Verfahrsystems 4 angeordnet. Die in Figur 2 dargestellte Anordnung befindet sich spiegelbildlich auf der gegenüberliegenden Seite des Werkstückträgers 5 noch einmal. Es können vier der dargestellten Anordnungen am Werkstückträger 5 angeordnet sein, vorzugsweise jeweils zwei der Anordnungen an gegenüberliegenden Seiten des Werkstückträgers 5.

Wenn das Verfahrsystem 4 in der in Figur 2 dargestellten Ausführungsform den Werkstückträger 5 in von der in Figur 1 beispielhaft dargestellten ausgefahrenen Position in die eingefahrene Position bewegt, ist der erste Verbindungspunkt 51 in Kontakt mit dem Verfahrsystem 4 und die Fertigungsachse 6 ist ohne Kontakt mit dem zweiten Verbindungspunkt 52. Insbesondere ist die Fertigungsachse 6 unterhalb des zweiten Verbindungspunkts 52 befindlich. In der eingefahrenen Position hebt die Fertigungsachse 6 den Werkstückträger 5 vermittels des zweiten Verbindungspunkts 52 nach oben parallel zur Richtung des Pfeils L. Durch das Anheben gelangt der erste Verbindungspunkt 51 außer Kontakt mit dem Verfahrsystem 4 und die Fertigungsachse 6 hebt den Werkstückträger 5 des zweiten Verbindungspunkts 52 in die Bearbeitungsposition.

Nach Erstellung des Werkstücks senkt die Fertigungsachse 6 den Werkstückträger 5 via des zweiten Verbindungspunkts 52 parallel zum Pfeil L soweit ab, bis der erste Verbindungspunkt 51 mit dem Verfahrsystem 4 in Kontakt kommt und der zweite Verbindungspunkt 52 außer Eingriff mit der Fertigungsachse 6 gelangt (Verfahrposition). Dann kann das Verfahrsystem 4 den Werkstückträger 5 aus der additiven Fertigungsmaschine (parallel zum Pfeil K in Figur 1) herausfahren.

Die Verbindung zwischen dem ersten Verbindungspunkt 51 und dem Verfahrsystem 4 und/oder dem zweiten Verbindungspunkt 52 und der Fertigungsachse 6 ist bei der in Figur 2 gezeigten Vorrichtung eine formschlüssige Verbindung, die durch die Schwerkraft hält. Die ersten und zweiten Verbindungspunkte 51 und 52 können wahlweise selbstzentrierend gestaltet werden, sodass sie sich in den entsprechenden Aufnahmen im Verfahrsystem 4 und/oder der Fertigungsachse 6 zentrieren. Ebenso können die Aufnahmen im Verfahrsystem 4 und/oder der Fertigungsachse 6 selbstzentrierend ausgeführt sein.

## Patentansprüche

1. Additive Fertigungsmaschine (1) umfassend ein Werkstückträgersystem und eine Tür, wobei das Werkstückträgersystem einen Werkstückträger (5) und ein Verfahrsystem (4) umfasst, und wobei der Werkstückträger (5) mit dem Verfahrsystem (4) werkzeuglos lösbar verbunden ist und das Verfahrsystem (4) ein Teleskopsystem umfasst, wobei das Verfahrsystem (4) den Werkstückträger (5) durch die geöffnete Türe aus einem Innenraum der additiven Fertigungsmaschine (1) heraus bewegen kann.

2. Additive Fertigungsmaschine nach Anspruch 1, bei welcher das Verfahrsystem den Werkstückträger aus einer Bearbeitungsposition in eine Verfahrposition bewegt.

3. Additive Fertigungsmaschine nach Anspruch 1 oder 2, bei welcher der Werkstückträger formschlüssig an dem Verfahrsystem und/oder in einer Bearbeitungsposition gehalten wird.

4. Additive Fertigungsmaschine nach Anspruch 3, bei welcher der Werkstückträger durch die Schwerkraft an dem Verfahrsystem und/oder in einer Bearbeitungsposition gehalten wird.

5. Additive Fertigungsmaschine nach einem der vorangegangenen Ansprüche, bei welcher der Werkstückträger weiterhin eine Heizung umfasst.

6. Additive Fertigungsmaschine nach einem der vorangegangenen Ansprüche, bei welcher der Werkstückträger an mehreren Punkten an dem Verfahrsystem und/oder in einer Bearbeitungsposition gehalten wird, wobei nur einer dieser Punkte eine spielfreie Verbindung ist.

7. Additive Fertigungsmaschine nach einem der vorangegangenen Ansprüche, weiterhin umfassend eine elektrische Verbindung zwischen dem Werkstückträger und dem Verfahrsystem.

8. Additive Fertigungsmaschine nach einem der vorangegangenen Ansprüche, bei welcher der Werkstückträger weiterhin eine Identifikationseinheit umfasst.

9. Additive Fertigungsmaschine nach einem der vorangegangenen Ansprüche, bei welcher der Werkstückträger weiterhin Aufnahmepunkte umfasst.

10. Additive Fertigungsmaschine nach einem der vorangegangenen Ansprüche, bei welcher der Werkstückträger elektrisch über eine lösbare Verbindung mit der additiven Fertigungsmaschine verbunden ist.

11. Additive Fertigungsmaschine nach einem der vorangegangenen Ansprüche, bei welcher die additive Fertigungsmaschine eine weitere Tür aufweist und der Werkstückträger auch durch die geöffnete weitere Türe aus dem Innenraum der additiven Fertigungsmaschine heraus bewegen kann.

12. Additive Fertigungsmaschine nach einem der vorangegangenen Ansprüche, bei welcher zumindest eine Fertigungsachse der additiven Fertigungsmaschine den Werkstückträger von dem Verfahrsystem in eine Bearbeitungsposition abhebt.

13. Additive Fertigungsmaschine nach einem der vorangegangenen Ansprüche, bei welcher der Werkstückträger erste und zweite Verbindungspunkte umfasst, wobei die ersten Verbindungspunkte zum Eingriff mit dem Verfahrsystem vorgesehen sind und die zweiten Verbindungspunkte zum Eingriff mit einer Fertigungsachse der additiven Fertigungsmaschine vorgesehen sind.

## Claims

1. An additive manufacturing machine comprising a workpiece carrier system and a door, wherein the workpiece carrier system comprises a workpiece carrier and a movement system, and wherein the workpiece carrier is detachably connected to the movement system toollessly and the movement system comprises a telescopic system, wherein the movement system can move the workpiece carrier out of an interior space of the additive manufacturing machine through the open door.

2. Additive manufacturing machine according to claim 1, in which the movement system moves the workpiece carrier from a processing position to a movement position.

3. Additive manufacturing machine according to claim 1 or 2, in which the workpiece carrier is held by form fit on the movement system and/or in a processing position.

4. Additive manufacturing machine according to claim 3, in which the workpiece carrier is held by gravity on the movement system and/or in a processing position.

5. Additive manufacturing machine according to any one of the preceding claims, wherein the workpiece carrier further comprises a heating.

6. Additive manufacturing machine according to one of the preceding claims, in which the workpiece carrier is held at several points on the movement system and/or in a processing position, wherein only one of these points is a backlash-free connection.

7. An additive manufacturing machine according to any one of the preceding claims, further comprising an electrical connection between the workpiece carrier and the movement system.

8. Additive manufacturing machine according to any one of the preceding claims, wherein the workpiece carrier further comprises an identification unit.

9. Additive manufacturing machine according to one of the preceding claims, wherein the workpiece carrier further comprises pick-up points.

10. Additive manufacturing machine according to one of the preceding claims, in which the workpiece carrier is electrically connected to the additive manufacturing machine via a detachable connection.

11. Additive manufacturing machine according to one of the preceding claims, in which the additive manufacturing machine has a further door and the workpiece carrier can also move out of the interior space of the additive manufacturing machine through the opened further door.

12. Additive manufacturing machine according to one of the preceding claims, in which at least one production axis of the additive manufacturing machine lifts the workpiece carrier from the movement system into a processing position.

13. The additive manufacturing machine according to any one of the preceding claims, wherein the workpiece carrier comprises first and second connection points, wherein the first connection points are provided for engagement with the movement system and the second connection points are provided for engagement with a manufacturing axis of the additive manufacturing machine.

## Revendications

1. Machine de fabrication additive comprenant un système de porte-pièce et une porte, le système de porte-pièce comprenant un porte-pièce et un système de déplacement, et le porte-pièce étant relié de manière amovible sans outil au système de déplacement et le système de déplacement comprenant un système télescopique, le système de déplacement pouvant déplacer le porte-pièce hors d'un espace intérieur de la machine de fabrication additive à travers la porte ouverte.

2. Machine de fabrication additive selon la revendication 1, dans laquelle le système de déplacement déplace le porte-pièce d'une position d'usinage à une position de déplacement.

3. Machine de fabrication additive selon la revendication 1 ou 2, dans laquelle le porte-pièce est maintenu par complémentarité de formes sur le système de déplacement et/ou dans une position d'usinage.

4. Machine de fabrication additive selon la revendication 3, dans laquelle le porte-pièce est maintenu par gravité sur le système de déplacement et/ou dans une position d'usinage.

5. Machine de fabrication additive selon l'une quelconque des revendications précédentes, dans laquelle le porte-pièce comprend en outre un chauffage.

6. Machine de fabrication additive selon l'une des revendications précédentes, dans laquelle le porte-pièce est maintenu en plusieurs points sur le système de déplacement et/ou dans une position d'usinage, un seul de ces points étant une liaison sans jeu.

7. Machine de fabrication additive selon l'une quelconque des revendications précédentes, comprenant en outre une connexion électrique entre le porte-pièce et le système de déplacement.

8. Machine de fabrication additive selon l'une quelconque des revendications précédentes, dans laquelle le porte-pièce comprend en outre une unité d'identification.

9. Machine de fabrication additive selon l'une quelconque des revendications précédentes, dans laquelle le porte-pièce comprend en outre des points de réception.

10. Machine de fabrication additive selon l'une des revendications précédentes, dans laquelle le porte-pièce est relié électriquement à la machine de fabrication additive par une connexion amovible.

11. Machine de fabrication additive selon l'une des revendications précédentes, dans laquelle la machine de fabrication additive présente une autre porte et le porte-pièce peut également se déplacer hors de l'espace intérieur de la machine de fabrication additive par l'autre porte ouverte.

12. Machine de fabrication additive selon l'une des revendications précédentes, dans laquelle au moins un axe de fabrication de la machine de fabrication additive soulève le porte-pièce du système de déplacement dans une position d'usinage.

13. Machine de fabrication additive selon l'une quelconque des revendications précédentes, dans laquelle le porte-pièce comprend des premiers et seconds points de connexion, les premiers points de connexion étant prévus pour s'engager avec le système de déplacement et les seconds points de connexion étant prévus pour s'engager avec un axe de fabrication de la machine de fabrication additive.
